# FASCICULE DE BREVET EUROPEEN

(11) **EP 1 036 967 B1**
(45) Date de publication et mention de la délivrance du brevet: **13.11.2002**
(21) Numéro de dépôt: 00400510.4
(22) Date de dépôt: 25.02.2000
(51) Int. Cl.: F16L 9/12, F16L 11/04

(54) **Tube antistatique à base de polyamides pour transport d'essence**
Antistatisches Rohr aus Polyamid zum Transport von Kraftstoff
Antistatic pipe of polyamide for transporting fuel

(30) Priorité: 16.03.1999 FR 9903215
(43) Date de publication de la demande: 20.09.2000
(73) Titulaire: Atofina, 92800 Puteaux (FR)
(72) Inventeur: Merziger, Joachim, 27000 Evreux (FR)
(74) Mandataire: Neel, Henry

(56) Documents cités:
- EP-A- 0 816 460
- US-A- 4 746 574

## Description

La présente invention concerne des tubes à base de polyamide pour transport d'essence et plus particulièrement des tubes pour amener l'essence du réservoir des automobiles jusqu'au moteur et des tubes pour le transport d'hydrocarbures dans les stations-service.

Pour des raisons de sécurité et de préservation de l'environnement, les constructeurs automobiles imposent aux tubes d'essence des caractéristiques mécaniques : résistance et flexibilité, et des caractéristiques de résistance accrue à la perméabilité. Les tubes doivent être le moins perméable possible aux produits pétroliers et à leurs additifs, en particulier le méthanol ou l'éthanol.

Les polyamides présentent toutes ces propriétés, cependant, pour présenter de bonnes propriétés mécaniques à basse température, les polyamides doivent être plastifiés. Or, les polyamides plastifiés sont moins étanches aux hydrocarbures que les polyamides non plastifiés, surtout les essences sans plomb.

La demande de brevet EP 0731308 décrit un tube à base de polyamides pour le transport d'essence. Ce tube comprend une couche intérieure comportant un mélange de polyamide et de polyoléfine à matrice polyamide et une couche extérieure comportant un polyamide. Une couche de liant et une couche d'un copolymère d'éthylène et d'alcool vinylique (EVOH) peuvent être disposées entre la couche intérieure et la couche extérieure.

Il est déjà connu de la demande de brevet EP 0781799 que dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de limiter la résistivité superficielle de la face interne du tube à une valeur en général inférieure à 10⁶ ohms. Il est connu d'abaisser la résistivité superficielle de résines ou matériaux polymériques en leur incorporant des matériaux conducteurs et/ou semi-conducteurs tels que le noir de carbone, les fibres en acier, les fibres de carbone, les particules (fibres, plaquettes, sphères) métallisées avec de l'or, de l'argent ou du nickel.

Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charges augmente, la viscosité du mélange polymère / charge augmente. De même, lorsque le taux de charge augmente, le module de flexion du polymère chargé augmente. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section II pour les charges en général et le chapitre 16, Section VI pour le noir de carbone en particulier.

Quant aux propriétés électriques du noir de carbone, le bulletin technique "Ketjenblack EC - BLACK 94/01" de la société AKZO NOBEL indique que la résistivité de la formulation chute très brutalement lorsqu'un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound.

La demanderesse a maintenant trouvé un autre tube multicouche à base de polyamide, très peu perméable à l'essence et ayant de très bonnes propriétés mécaniques tout en étant électroconducteur pour éviter toute accumulation de charges électrostatiques pouvant générer des étincelles.

La présente invention concerne un tube comprenant une couche intérieure et une couche extérieure, la couche intérieure comprenant un mélange de polyamide et de polyoléfine à matrice polyamide, cette couche intérieure étant chargée de noir de carbone électroconducteur (C électro.), la couche extérieure comprenant un polyamide.

Plus précisément la présente invention est un tube multicouche à base de polyamides, caractérisé par le fait qu'il comporte dans sa direction radiale de l'intérieur vers l'extérieur :
- une couche intérieure formée d'un polyamide ou d'un mélange de polyamide et de polyoléfine à matrice polyamide, cette couche comportant une charge dispersée de noir de carbone électroconducteur produisant une résistivité surfacique inférieure à 10⁶ Ω,
- une couche intermédiaire formée d'un polyamide ou d'un mélange de polyamide et de polyoléfine à matrice polyamide, cette couche ne comportant pas de noir de carbone électroconducteur ou de quantité électriquement significative de ce noir de carbone,
- une couche de liant,
- une couche extérieure de polyamide,
les couches ci-dessus adhérant entre elles dans leur zone de contact respective.

De préférence, le tube comporte une couche supplémentaire d'EVOH disposée entre la couche extérieure de polyamide et la couche intermédiaire. Cette couche supplémentaire assure une meilleure perméabilité aux hydrocarbures et à leurs additifs.

S'agissant du polyamide ou du mélange de polyamide et de polyolefine de la couche intérieure ou de la couche intermediaire, on peut utiliser tout polyamide.

On entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylène-diamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de tous ces monomères ce qui conduit à des copolyamides.

On peut utiliser des mélanges de polyamide. On utilise avantageusement le PA-6 et le PA-6,6 et le PA 12.

S'agissant des polyoléfines du mélange de polyamide et de polyoléfines de la couche intérieure ou intermédiaire on entend par polyoléfines des polymères comprenant des motifs oléfines tels que par exemple des motifs éthylène, propylène, butène-1, et leurs homologues supérieurs.

A titre d'exemple, on peut citer :
- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.
- les copolymères blocs styrène / éthylène-butène / styrène (SEBS) éventuellement maléisés.

On peut utiliser des mélanges de deux ou plusieurs de ces polyoléfines.

On utilise avantageusement :
- le polyéthylène,
- les copolymères de l'éthylène et d'une alphaoléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé,
- le polypropylène.

Il est recommandé, pour faciliter la formation de la matrice de polyamide, et si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :
- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2291225 et EP 342066.

La quantité de polyamide formant la matrice dans la couche intérieure peut être comprise entre 55 et 95 parties pour 5 à 45 parties de polyoléfines.

La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères de la couche intérieure par mélange de polyamide, de polyoléfine et éventuellement de compatibilisant selon les techniques usuelles de mélange à l'état fondu (bi vis, Buss, monovis).

Ces mélanges de polyamide et de polyoléfine de la couche intérieure peuvent être plastifiés et éventuellement contenir des charges telles que du noir de carbone, etc.

De tels mélanges de polyamide et de polyoléfine sont décrits dans le brevet US 5342886.

On décrit maintenant des formes preferrées du mélange de polyamide et de polyoléfines à matrice polyamide. Ce mélange contenant du noir conducteur peut être utilisé dans la couche intérieure et sans noir conducteur dans la couche intermediaire.

**Selon une première forme préférée de l'invention** la polyoléfine comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

**Selon une deuxième forme préférée de l'invention** la polyoléfine comprend (i) du polypropylène et (ii) une polyoléfine qui résulte de la réaction d'un polyamide (C4) avec un copolymère (C3) comprenant du propylène et un monomère insaturé X, greffé ou copolymérisé.

**Selon une troisième forme préférée de l'invention** la polyoléfine comprend (i) un polyéthylène de type LLDPE, VLDPE ou metallocene et (ii) un copolymère éthylène - (meth)acrylate d'alkyle -anhydride maléique.

**S'agissant de la première forme** les proportions sont avantageusement les suivantes (en poids) :
60 à 70 % de polyamide,
5 à 15 % du mélange de (C1) et (C2) cogreffé
le complément en polyéthylène haute densité .
S'agissant du polyéthylène haute densité sa densité est avantageusement comprise entre 0,940 et 0,965 et le MFI entre 0.1 et 5 g/10 min. ( 190°C 2,16 kg). Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène / propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/ 10 min. (190°C - 2,16 kg) de préférence 13 à 20.

Avantageusement le mélange de (C1) et (C2) cogreffés, est tel que le rapport MFI₁₀ / MFI₂ est supérieur à 18,5, MFI₁₀ désignant l'indice d'écoulement à 190°C sous une charge de 10 kg et MFI₂ l'indice sous une charge de 2,16 kg. Avantageusement le MFI₂₀ du mélange des polymères (C1) et (C2) cogreffés est inférieur à 24. MFI₂₀ désigne l'indice d'écoulement à 190°C sous une charge de 21,6 kg.

**S'agissant de la deuxième forme** de l'invention les proportions sont avantageusement les suivantes (en poids) :
60 à 70 % de polyamide,
20 à 30 % de polypropylène
3 à 10 % d'une polyoléfine qui résulte de la réaction d'un polyamide (C4) avec un copolymère (C3) comprenant du propylène et un monomère insaturé X, greffé ou copolymérisé.

Le MFI du polypropylène est avantageusement inférieur à 0,5 g/10 min (230°C - 2,16 kg) et de préférence compris entre 0,1 et 0,5. De tels produits sont décrits dans EP 647681.

On décrit maintenant le produit greffé de cette deuxième forme de l'invention. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth)acrylique, l'anhydride maléique et les epoxydes insaturés tels que le (méth)acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles). Avantageusement (C3) est tel que X est greffé. Le greffage est une opération connue en soi.

(C4) est un polyamide ou un oligomère de polyamide. Des oligomères de polyamide sont décrits dans EP 342066 et FR 2291225. Les polyamides (ou oligomères) (C4) sont les produits de condensation des monomères déjà cités plus haut. On peut utiliser des mélanges de polyamides. On utilise avantageusement le PA-6, le PA-11, le PA 12, le copolyamide à motifs 6 et motifs 12 (PA-6/12), et le copolyamide à base de caprolactame, hexaméthylènediamine et acide adipique (PA-6/6.6). Les polyamides ou oligomères (C4) peuvent être à terminaisons acides, amine ou monoamine. Pour que le polyamide ait une terminaison monoamine il suffit d'utiliser un limiteur de chaîne de formule 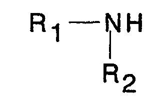 dans laquelle :
R₁ est l'hydrogène ou un groupement alkyle linéaire ou ramifié contenant jusqu'à 20 atomes de carbone,
R₂ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de C4 dans C3 + C4 en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

**S'agissant de la troisième forme** les proportions sont avantageusement les suivantes (en poids) :
60 à 70 % de polyamide,
5 à 15 % d'un copolymère éthylène-(meth)acrylate d'alkyle -anhydride maléique.
le complément est un polyéthylène de type LLDPE , VLDPE ou metallocene; avantageusement la densité de ce polyethylene est comprise entre 0,870 et 0,925, et le MFI est compris entre 0,1 et 5 (190°C - 2.16 kg).
Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Le terme "(méth)acrylate d'alkyle" désigne avantageusement les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

La température de fusion est comprise entre 80 et 120°C. Ces copolymères sont disponibles dans le commerce. Ils sont produits par polymérisation radicalaire à une pression pouvant être comprise entre 200 et 2500 bars.

A titre d'exemple, on peut aussi utiliser les mélanges suivants (en % poids) :
1)
   - 55 à 70 % de PA-6,
   - 5 à 15 % d'un copolymère éthylène propylène majoritaire en polypropylène greffé par de l'anhydride maléique puis condensé ensuite avec des oligomères monoaminés de caprolactame,
   - le complément à 100 % en polypropylène.
2)
   - 55 à 70 % de PA-6,
   - 5 à 15 % d'au moins un copolymère de l'éthylène avec (i) un (méth)acrylate d'alkyle ou un ester vinylique d'acide carboxylique insaturé et (ii) un anhydride d'acide carboxylique insaturé ou un époxyde insaturé greffé ou copolymérisé,
   - le complément en polyéthylène.
3)
   - 55 à 70 % de PA-6.
   - 5 à 15 % de polyéthylène ou copolymères de l'éthylène et d'une alphaoléfine greffé par de l'anhydride maléique ou du méthacrylate de glycidyle.
   - le complément en polyéthylène haute densité.

Le polyamide de la couche extérieure peut être choisi parmi les polyamides cités précédemment pour la couche intérieure. Avantageusement, on utilise le polyamide 11 ou le polyamide 12. Avantageusement, le polyamide de la couche extérieure est plastifié.

On peut utiliser les plastifiants usuels tels que le butyl benzène sulfonamide (BBSA) et les polymères comprenant des blocs polyamides et des blocs polyéther. Ces polymères à blocs résultent de la condensation de blocs polyamides à extrémités carboxyliques avec, soit des polyétherdiols, soit des polyétherdiamines, soit un mélange de ces polyéthers. Cette couche extérieure peut aussi contenir aussi des additifs anti oxydants et des charges telles que du noir de carbone éventuellement électroconducteur.

Les tubes selon la présente invention comportent entre leur couche extérieure et leur couche intérieure décrites ci-dessus, deux ou trois autres couches. Chaque couche d'un même tube adhère fortement à sa ou ses couches immédiatement voisine(s). En effet, un tube qui ne présente pas de solidarité mécanique entre les couches ne peut être plié ou coudé facilement par formage à chaud ; dans ce cas, le matériau le plus mince forme des plis au cours de l'opération.

Dans le cas d'un tube multicouche selon la présente invention, la couche qui suit dans une direction radiale du tube, de l'intérieur vers l'extérieur, la couche intérieure chargée de noir de carbone ne contient pas de charge électroconductrice ou de quantité électriquement significative de noir de carbone. Par quantité électriquement significative, on entend une quantité telle qu'elle produit une résistivité surfacique sur tube inférieure ou égale à 10⁹ Ω.

Cette couche essentiellement exempte de noir de carbone électroconducteur est donc constituée de polyamide ou d'un mélange de polyamide et de polyoléfine à matrice polyamide choisi parmi ceux décrits ci-dessus. Avantageusement cette couche intermédiaire est constituée d'un mélange de polyamide et de polyoléfine.

Comme les couches intérieure et la couche suivante ont des compositions polymériques de même nature, elles adhérent fortement entre elles.

Les tubes de l'invention peuvent être produits par coextrusion.

Il est prévu dans les tubes selon la présente invention d'avoir une couche de liant immédiatement après la couche extérieure en polyamide, dans la direction radiale du tube de l'extérieur vers l'intérieur.

La couche de liant permet une bonne adhésion entre la couche extérieure en polyamide et la couche d'EVOH ou la couche de mélange de polyamide et de polyoléfine à matrice polyamide.

A titre d'exemple de liant, on peut citer :
- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les époxydes insaturés ; ces copolymères pouvant être greffés par des anhydrides d'acides dicarboxyliques insaturés tels que l'anhydride maléique ou des époxydes insaturés tels que le méthacrylate de glycidyle.

On peut également utiliser un liant tel que décrit dans la demande brevet EP 0816460 A1.

Selon une autre forme de l'invention, on peut disposer entre les couches intérieure et extérieure une couche d'un polymère comprenant des motifs éthylène et des motifs alcool vinylique (EVOH).

On utilise les structures :
- Couche extérieure en PA / liant /PA ou mélange PA, PE /PA ou mélange PA, PE, chargé de noir de carbone électroconducteur.
Couche extérieure en PA / liant / EVOH /PA ou mélange PA, PE /PA ou mélange PA, PE chargé de noir de carbone électroconducteur.

Le liant peut être choisi parmi les polymères greffés énoncés ci-dessus et dont certains sont commercialisés par a société ELF ATOCHEM S.A. sous la marque OREVAC®.

Le mélange PA, PE à matrice PA peut être choisi parmi les produits commercialisés par la société ELF ATOCHEM S.A. sous la marque ORGALLOY®.

Le PA ou le mélange PA, PE à matrice PA contenant du noir de carbone électroconducteur est obtenu en mélangeant les constituants dans un malaxeur à chaud ou encore dans une extrudeuse.

Avantageusement, la couche intérieure chargée de noir de carbone électroconducteur a une épaisseur allant de 25 à 300 µm et de préférence de 50 à 150 µm.

La couche suivante en direction de l'extérieur et ne contenant pas de noir de carbone électroconducteur ou contenant une quantité non électriquement significative, a en général une épaisseur d'au moins 50 µm et de préférence de 50 à 500 µm.

La couche de liant a une épaisseur en général d'au moins 10 µm et de préférence de 20 à 100 µm.

La couche extérieure a une épaisseur en général d'au moins 300 µm et de préférence de 400 à 800 µm.

La couche éventuelle supplémentaire d'EVOH a une épaisseur d'au moins 20 µm et de préférence de 20 à 200 µm.

De préférence, le tube selon la présente invention se caractérise par un diamètre extérieur allant de 6 à 12 mm, une épaisseur totale de 0,495 mm à 1,90 mm,
une épaisseur de 25 à 300 µm pour la couche intérieure chargée de C électro.,
une épaisseur de 50 à 500 µm pour la couche intermédiaire,
une épaisseur de 20 à 100 µm pour la couche de liant,
une épaisseur de 400 à 800 µm pour la couche extérieure
et pour la couche d'EVOH éventuellement présente :
une épaisseur de 20 à 200 µm.

Ces tubes multicouches peuvent être cylindriques de diamètre constant ou annelés.

De manière classique, ces tubes peuvent comporter des gaines de protection notamment en caoutchouc pour les protéger des points chauds du moteur.

Quant aux tubes utilisés dans les stations-service, le diamètre extérieur est en général de 20 à 120 mm et leur épaisseur de 0,8 à 14 mm. Les épaisseurs de liant et de couche intérieure restent identiques à celles citées ci-dessus. Les tubes peuvent être renforcés par toutes les méthodes usuelles.

L'invention sera mieux comprise à l'aide des exemples suivants donnés à titre purement illustratif.

### Exemples

On a fabriqué par coextrusion deux tubes ayant chacun un diamètre extérieur de 8 mm et une épaisseur totale de 1 mm.

### Exemple 1

Le tube à la structure suivante en commençant par la couche extérieure :
PA 12 / OREVAC® / ORGALLOY® / ORGALLOY® + C électro.

Les épaisseurs en µm de ces couches énoncées successivement dans le même sens :
475 / 50 /375 / 100

### Exemple 2

Le tube à la structure suivante en commençant par la couche extérieure :
PA 12 / OREVAC® / EVOH / ORGALLOY® / ORGALLOY® + C électro.

Les épaisseurs en µm de ces couches énoncées successivement dans le même sens :
475 / 50 /100 / 275 / 100

## Revendications

1. Tube multicouche à base de polyamides, **caractérisé par le fait qu'**il comporte dans sa direction radiale de l'intérieur vers l'extérieur :
- une couche intérieure formée d'un polyamide ou d'un mélange de polyamide et de polyoléfine à matrice polyamide, cette couche comportant une charge dispersée de noir de carbone électroconducteur produisant une résistivité surfacique inférieure à 10⁶ Ω,
- une couche intermédiaire formée d'un polyamide ou d'un mélange de polyamide et de polyoléfine à matrice polyamide, cette couche ne comportant pas de noir de carbone électroconducteur ou de quantité électriquement significative de ce noir de carbone,
- une couche de liant,
- une couche extérieure de polyamide,
les couches ci-dessus adhérant entre elles dans leur zone de contact respective.

2. Tube selon la revendication 1, **caractérisé par le fait qu'**il comporte une couche supplémentaire d'EVOH disposée entre la couche de liant et la couche intermédiaire.

3. Tube selon l'une des revendications 1 à 2, **caractérisé par** un diamètre extérieur allant de 6 à 12 mm, une épaisseur totale de 0,495 mm à 1,90 mm,
- une épaisseur de 25 à 300 µm pour la couche intérieure chargée de C électro.,
- une épaisseur de 50 à 500 µm pour la couche intermédiaire,
- une épaisseur de 20 à 100 µm pour la couche de liant,
- une épaisseur de 400 à 800 µm pour la couche extérieure,
et pour la couche d'EVOH éventuellement présente :
- une épaisseur de 20 à 200 µm.

## Patentansprüche

1. Mehrschichtige Rohrleitung auf der Basis von Polyamiden, **dadurch gekennzeichnet, daß** sie in radialer Richtung von innen nach außen enthält:
- eine innere Schicht, die aus einem Polyamid oder einem Gemisch von Polyamid und Polyolefin mit Polyamidmatrix gebildet ist, wobei die Schicht als dispergierten Füllstoff elektrisch leitenden Ruß enthält, der dazu führt, dass der Oberflächenwiderstand unter 10⁶ Ω liegt;
- eine Zwischenschicht, die aus einem Polyamid oder einem Gemisch von Polyamid und Polyolefin mit Polyamidmatrix gebildet ist, wobei diese Schicht keinen elektrisch leitenden Ruß oder keinen Ruß in einer in elektrischer Hinsicht bemerkenswerten Menge enthält;
- eine Bindemittelschicht; und
- eine äussere Polyamidschicht,
wobei die Schichten in ihren jeweiligen Kontaktbereichen aneinander haften.

2. Rohrleitung nach Anspruch 1, **dadurch gekennzeichnet, daß** sie eine zusätzliche EVOH-Schicht enthält, die zwischen der Bindemittelschicht und der Zwischenschicht vorgesehen ist.

3. Rohrleitung nach einem der Ansprüche von 1 und 2, **gekennzeichnet durch** einen Außendurchmesser von 6 bis 12 mm und eine Gesamtdicke von 0,495 bis 1,90 mm,
- eine Dicke von 25 bis 300 µm für die innere Schicht, die als Füllstoff Cₑₗₑₖₜᵣₒ enthält,
- eine Dicke von 50 bis 500 µm für die Zwischenschicht,
- eine Dicke von 20 bis 100 µm für die Bindemittelschicht,
- eine Dicke von 400 bis 800 µm für die äußere Schicht, und
- eine Dicke von 20 bis 200 µm für die gegebenenfalls zusätzlich enthaltene EVOH-Schicht.

## Claims

1. Polyamide-based multilayer, **characterized in that** it comprises, in its radial direction, from the inside to the outside:
- an inner layer formed from a polyamide or from a polyamide/polyolefin blend having a polyamide matrix, this layer containing a dispersed electrically conductive carbon black filler, producing a surface resistivity of less than 10⁶ Ω/□,
- an intermediate layer formed from a polyamide or from a polyamide/polyolefin blend having a polyamide matrix, this layer not containing electrically conductive carbon black or an electrically significant amount of this carbon black,
- a tie layer,
- a polyamide outer layer,
the above layers adhering to each other in their respective contact region.

2. Pipe according to Claim 1, **characterized in that** it includes an additional layer made of EVOH placed between the tie layer and the intermediate layer.

3. Pipe according to one of Claims 1 to 2, **characterized by** an outside diameter ranging from 6 to 12 mm and a total thickness of 0.495 mm to 1.90 mm,
- a thickness of 25 to 300 µm for the inner layer filled with electro. C,
- a thickness of 50 to 500 µm for the intermediate layer,
- a thickness of 20 to 100 µm for the tie layer,
- a thickness of 400 to 800 µm for the outer layer,
and, for the optionally present EVOH layer:
- a thickness of 20 to 200 µm.
